# EUROPEAN PATENT APPLICATION

(11) **EP 2 453 334 A1**
(43) Date of publication of application: **16.05.2012**
(21) Application number: 11008407.6
(22) Date of filing: 19.10.2011
(51) Int. Cl.: G05D 23/19, F24D 19/10, F24H 9/20

(54) **Method for minimising daily energy consumption of a water storage heater through simplified logical processes**

(30) Priority: 10.11.2010 IT AN20100196
(71) Applicant: ARISTON THERMO S.P.A., 60044 Fabriano (AN) (IT)
(72) Inventor: Ferroni, Stefano, 60044 Fabriano (AN) (IT); Mancini, Angelo, 60044 Fabriano (AN) (IT); Paolinelli, Roberto, 60044 Fabriano (AN) (IT)
(74) Representative: Premru, Rok

(57) **Abstract**

The object of the invention is a method for managing a storage water heater aimed at reducing thermal dispersions.

The method provides for the use of the one or more active periods (PAₙ) at reduced rates, scheduled during a day, for managing the water maintenance temperature in a generic electrical water heater. The method uses very simplified logical processes of the microprocessor for measuring and processing the data typical of the storage water heater during said one or more active periods (PAₙ).

## Description

The present invention relates to a new method for the management of water preservation temperature in a generic electrical storage water heater controllable by an electronic control.

The advantage of water storage heaters is to be able to dispense very high water flow rates while limiting the thermal power installed. The amount of water that can be dispensed at the usage temperature Tᵤ during a single drawing may be larger than the volume of the storage tank as this is especially kept at a temperature higher than said usage temperature Tᵤ and the water withdrawn is then used mixing it with cold water.

Since storage tanks are expensive and cumbersome it is normal to have a volume as moderate as possible while keeping the storage temperature T_{acc} high (generally 75 °C), whereas the actual usage temperature Tᵤ, normally comprised between 35° and 40 °C, is obtained at the usage points through mixing with cold water.

Generally, the selected storage volume is sufficient for fulfilling the largest of the expectable drawings for that specific utility keeping the storage temperature to the maximum possible value while the thermal power installed must be such as to restore a sufficient water reserve for the next drawing.

In conclusion, various utility categories correspond to as many models of storage water heaters (hereinafter simply referred to as water heater for shortness).

In order to ensure the heaviest service, that is, the largest drawing expected, it is clear that most of the time the water heater is kept to a storage temperature which is uselessly high for most of the remaining drawings.

As a consequence, as known, in storage water heaters the main cause of inefficiency is due to the thermal dispersions that can be even very high and often useless during the whole day, even far-off the drawing time.

Methods have thus been developed for learning, through electronic logics and temperature sensors, which the users' habits are, in general cyclic with weekly period: that is, how much hot water and at what times of the day it is used so as to bring the storage temperature T_{acc} to the proper value to satisfy the users just in time for the same, so as to minimise energy consumption due to thermal dispersion.

Hourly distribution and amount of consumptions are herein called "drawing profile". Examples of methods for meeting the drawing profile minimising thermal dispersions are described in patent applications IT AN2008A000052 and IT AN2008A000051.

The methods described in these documents, as well as further methods that are prior and mentioned in the above documents, require an electronic device active during the entire day, that is, a water heater always powered with electrical energy.

However, in some Countries, since some time for electrical storage water heaters it has been possible to use a dedicated electrical supply line, very advantageous as it is at reduced rates, which however is only active in one or more periods of the day, in general one to three, herein called active periods PAₙ (with "n" ranging from 1 to 3). In most cases, there is only one active period at night PA₁ from 10.00 PM to 6.00 AM; the dispensing time therefore is 8 continuous hours.

In some zones, on the other hand, there are three active periods; one at night PA₁ lasting 5 hours, from 1.00 AM to 6.00 AM; one at noon PA₂ lasting 2 hours from 12.00 PM to 2.00 PM; an afternoon one PA₃ lasting 1 hour from 5.00 PM to 6.00 PM, thus for a total of 8 hours again.

In any case, should other sequences of active periods PAₙ be required, at present or in the future, also in other zones, the night one PA₁ of course always is the longest one as it occurs in the period of low electrical energy demand for industrial and civil use.

Using such dedicated line, while as a general rule the methods for learning the consumption modes (times and amounts) may be applied powering the electronic device from the standard electrical line, this would be totally useless since it would not be possible to activate the electrical heating element as desired, as described in the above documents.

That is, using the dedicated electrical line, the water heater becomes a simple passive storage tank outside such active periods PAₙ.

Since there is no possibility of raising the temperature outside such active periods PAₙ, in such circumstances the storage temperature T_{acc}, which must necessarily be reached within said active periods PAₙ, is necessarily higher than when the water heater is continuously powered since as said, there is no possibility of raising it again at the end of each drawing. That is, generally, for the most common water heater models, when current is only supplied in said active periods PAₙ, the storage temperature T_{acc} is higher than 80 °C, since there is no possibility of supplying additional energy outside the active periods PAₙ whereas for the same water heater, if always powered during the day, even a temperature of 75 °C may be too high; even using electrical energy at a reduced rate, this implies a higher consumption of the same especially due to the impossibility of a continuous temperature control, as proposed for example in said documents AN2008A000052 and IT AN2008A000051.

A, method for using a time band at a reduced rate is described in doc. WO 2008/132570; the activation of the heating within a time band is delayed as much as possible therein, while the temperature Tₛₑₜ to reach at the end of the heating is decided based on evaluations that depend on a learning step of the drawing profile. The method is also capable of evaluating the water heating speed and thus calculating the heating time required to reach temperature Tₛₑₜ.

The method therefore allows dispensing the thermal energy required for meeting the planned service by evaluating and setting temperature Tₛₑₜ and then heating by the time required to reach such temperature.

Such method is effective but requires an electronic thermostat that is the only one capable of receiving instructions from a microprocessor about the temperature Tₛₑₜ to be set each time.

In short, the method is useful when changing the temperature Tₛₑₜ at any time of the day is envisaged and possible whereas it offers too high and little usable performance if there is no dispensing of electrical energy outside said time bands; that is, if using the microprocessor during the day is impossible.

An object of the present invention is to reduce thermal energy dispersions, the temperature of water made available to the user at the time of use being equal.

A further object of the present invention is to use the one or more active periods (PAₙ) to the best for managing the water maintenance temperature in a generic electrical water heater.

A further object of the method of the present invention is that of learning and automatically storing, at least for weekly cycles, which days of the week are characterised or not by drawings.

A further object of the present invention is to detect the users' behaviour changes changing the learnt and stored drawing profile accordingly.

A further object of the present invention is to allow the use of electromechanical thermostats for activating and/or deactivating the heating element intended for heating water in the water heater.

The main object of the present invention is to achieve one or more of the above objects by measuring and processing data substantially only duping the active night period (PA₁) and through very simplified logical processes of the microprocessor.

These and other objects are achieved by the method, in the versions thereof, as illustrated in the following description and in the annexed claims, which constitute an integral part of the description itself.

The description of the method does not require the aid of figures.

The method of the invention carries out the water heating forcedly within said one or more active periods PA₁. PA₂ and PA₃, giving priority to the use of the first PA₁ and, as already in WO 2408/132570, delaying the activation of the heating within said period as much as possible.

The method of the invention requires the water heater to be piloted by an electronic control CE provided with means suitable at least for performing the following functions:
- measuring the passage of time;
- receiving or having pre-stored information on the time length of the one or more active periods PAₙ:
- receiving or having prestored information on the thermo-physical features of the electrical water heater;
- receiving information on the water temperature inside the electrical water heater,
- storing the preset and/or read data;
- processing calculations from received or stored data;
- allowing the activation/deactivation of the electrical heating element based on the calculations processed and on the temperature of the water itself.

While the storage of the saved data remains uninterruptedly active, the activation of the other functions, including the measurement of the passage of time, may take place (or necessarily takes place, as regards the activation of the electrical heating element) only during said active periods PAₙ.

So far, in any case, only the most common case of a single active night period PA₁ usually lasting 8 h, as seen, is taken into account.

As said, time measurement may be a function that is only active during said active periods PAₙ because, for the purposes of the invention, the absolute determination of times or the recognition of the current day of the week (in other words, whether it is Sunday or Monday) are not required.

On the contrary, a timer is sufficient, which is activated at the beginning of each active period PAₙ and records the length thereof recognising it therefrom, and thus determining whether the zone is one where a single active night period PA₁ lasting 8 continuous hours is scheduled, or the zone is one with a sequence of three active periods of different length. There can be no ambiguity in recognising such active periods PAₙ, in particular of PA₁, not even if others of a different amount or length were activated, since the night one PA₁ certainly is the longest one.

Once the active periods have been identified, the periodicity thereof is recognised, which is daily, and thus when the cyclical sequence thereof is repeated, the sequence of days is identified as well, so that they may be numbered from the first to the seventh of a seven day cycle.

Moreover, very reasonably, the method requires that no water drawings are made by the users during such single active night period PA₁.

Finally, the method requires that the electrical power of the heating elements of the water heater is such as to reach the desired temperature within said single night period PA₁. However, as an alternative, it is also possible to consider a reading of the drawings (as that at traditional rate) and, if they occur, a correction of the final heating time based on this information.

Some of the main physical quantities used thereby are now listed and defined.

Tₘ, taken as representative of the water temperature in the water heater, indicates the temperature resulting from the mean of the one or more temperatures T, T₁, T₂ sensed by the one or more sensors S, S₁, S₂ placed at different heights in the same water heater_{;} such mean is not necessarily an arithmetical mean but it can be a weighed mean to give more importance to one or the other of said one or more temperatures T, T₁, T₂.

T_{sct} is the calibration temperature of the thermostat that activates/deactivates the electrical resistance; temperature Tₛₑₜ has a predetermined fixed value, which allows using an electromechanical thermostat; in other words, the method does not require an electronic thermostat the calibration temperature whereof must be modified by a microprocessor; the value of T_{sct} is equal to the desired storage temperature value T_{acc} to perform the service; preferably, temperature Tₛₑₜ is equal to 82 °C. Of course, whatever the ON or OFF status of the thermostat, the activation of the electrical resistor is only possible within the active periods PAₙ.

AT_{hysteresis} defines the hysteresis associated to said temperature Tₛₑₜ, that is, ΔT_{hysteresis} is the difference between the thermostat stop and restart temperature. The hysteresis value ΔT_{hysteresis} is predetermined as well, as it depends on the type of thermostat used. In the case of mechanical thermostats, the hysteresis value ΔT_{hysteresis} may be, as is known, substantially equal to 8-10°C for rod thermostats, to 5°C for bulb thermostats.

T_{finale} indicates the value of temperature Tₘ after the beginning of an active night period PA₁, that is, the water heater temperature at the end of a working day.

T_{rafrredd} indicates the T_{finale} value at which the water heater drops if no drawing has occurred during the previous 24 h. Without such drawings, that is, without cold water entering to replace the hot one that has been drawn, the water heater temperature drops, starting from the value it had at the end of the active night period PA₁ of heating only due to the thermal dispersions to the environment. Considering the temperature of the room whereto the water heater disperses heat substantially unchanged, with good approximation, T_{raffredd} then has a constant value, typical of the specific water heater installed as it depends on T_{sct}, on the cooling time (which is 24 h ― length of the active night period PA₁), on the water heater features and, exactly, on the room temperature; all unchanging values.

As a consequence, T_{raffredd} may be given a predetermined value measured by the manufacturer and prestored or, preferably, to also keep into account the room temperature of the installation site, which may be measured and stored automatically by the water heater electronic control at the beginning of an active night period PA₁ provided that the user, according to suitable instructions provided by the installer, has made no drawings during the previous 24 h.

T_{rif} and said reference temperature indicate the value obtained by the expression T_{rif} = T_{raffredd} - ΔT_{hysteresis}.

As a consequence, since both T_{raffredd} and ΔT_{hysteresis} have unchanging constant and typical values, the reference temperature T_{rif} has a fixed value as well, typical of the water heater. It is noted that the value of T_{rif} is about 50 °C for the most common water heater models. Tᵤ indicates the minimum useful temperature for using hot water (substantially 35 - 40 °C).

When the temperature at the water heater dome drops below T_{u,} this means that all the hot water that the water heater was capable of dispensing has been used and that optionally, the user has given up further drawings at an unpleasantly low temperature; the temperature at the dome cannot be measured directly since the one or more sensors S, S₁, S₂ that provide information about Tₘ (that is, about the temperature actually detected) are located much lower than the same dome; however, it is possible to experimentally determine which value of Tₘ is indicative of the fact that the temperature at the dome has dropped to Tᵤ or slightly below.

Useful minimum final temperature T_{finale.min} is the final temperature value T_{finale} found when the dome has dropped just below Tᵤ; that is, when the temperature at the dome is Tᵤ - δTᵤ, with δTᵤ, for example, equal to 2 °C.

By way of an example, a possible experimental value of T_{finale.min} is 26 °C when the temperature at the dome is 38 °C.

According to the method of the invention, if T_{finale} < T_{finale.min}, this indicates that the water heater has not fully performed the service.

δt₁ indicates the time interval required to bring temperature Tₘ of the water from T_{finale.min} to T_{set.} Since also δt₁ depends on the construction features of the water heater and on the value T_{finale.min} taken as minimum temperature for using the hot water at Tᵤ, it is an unchanging feature that may be prestored by the manufacturer. As an alternative, it may be learnt at least as indicated in IT AN2008A000052 and IT AN2008A000051. For the purposes of the present invention, therefore, the time interval δt₁ is considered data available to the electronic control CE.

Going now to the water heating method according to the invention, it is assumed that drawings have been made during the day just ended only if temperature T_{finale} as defined above is below T_{rif}. On the other hand, it is assumed that no drawings have been made if T_{finale} >= T_{rif}.

This assumption has a clear physical foundation: while T_{raffredd} is the value taken by T_{finale} without drawings if the water heater, at the end of the active night period PA₁, had reached Tₛₑₜ T_{rif}, on the other hand, is the value taken by T_{finale} without drawings if the water heater, at the end of the active night period PA₁, had dropped to Tₛₑₜ - ΔT_{hysteresis.}

T_{rif}, therefore, is the minimum value that may be reached just by the effect of cooling. According to the invention, the installation of the water heater is followed by a first learning step Fa, hereinafter "initial learning step Fa" during which
- water drawings by the user are prevented while the electronic control CE,
   - in a first sub-step Fa₁ of recognition of the active periods PAₙ, disables the activation of the heating element and meanwhile records and stores the start and end times of the one or more of said active periods PAₙ; such storing sub-step Fa₁ lasts until the recurring of the active night period PA₁ is detected;
   - in a subsequent second sub-step Fa₂ then, aiming to check the reference temperature T_{rif}, it enables the activation of the heating element at the beginning of the immediately subsequent active night period PA₁ and finally, at the beginning of the consecutive active night period PA₁, reads the final temperature T_{finale} which is assumed as being equal to T_{raffredd,} derives the reference temperature T_{rif} therefrom by the above mentioned formula T_{rif} = T_{raffredd} - ΔT_{hysteresis} and finally stores the calculated value of T_{rif}.

These first Fa₁ and/or second Fa₂ learning sub-steps may alternatively be prevented by entering and storing, by the manufacturer or installer, the start and end times of the one or more active periods PAₙ and/or the reference temperature T_{rif} remembering that the latter, as defined, depends on the cooling time, that is, more precisely, on the length of said one or more active periods PAₙ.

A second learning step Fb then follows, hereinafter "drawing learning step Fb", lasting seven days deemed as representative of the cyclical weekly habits of the users.

During such drawing learning step Fb, wherein it is learnt in which of these days there are or not any hot water drawings,
- water drawings are allowed according to the requirements;
- the final temperature T_{finale} is read at the beginning of each active night period PA₁;
- the day that has just ended or that is about to end (according to whether the beginning of the active night period PA₁ is after or before midnight) is recorded as "day with drawings" only if temperature T_{finale} is lower than T_{rif}, otherwise, it is recorded as "day without drawings".

At the end of this optional first step and this required second step, a heating step Fc is activated as follows.

The heating step Fc,
- is only allowed if the day that is beginning is stored as "day with drawings";
- takes place during the active night period PA₁ so that the end of the scheduled heating period matches the instant at which the same active night period PA₁ends.

According to a first version, the heating step Fc has an unconditional length δt₁ as defined above.

According to a second version, the heating step Fc has length δt₁ (or length equal to PA₁ if the latter is shorter) if there were drawings on the day before but it has a reduced length δt₂ <δt₁ if there were no drawings an the day before.

According to an additional possibility, applicable to both the first and the second version, the electronic control CE checks temperature Tₘ a just before the end of the active night period PA₁ and if it has a value < of T_{set -} ΔT_{hysteresis,} since this means that no sufficient time δt₁ or δt₂ for heating was allowed it increase value δt₁ or δt₂, according to which one has been applied; such increase may occur by multiplying by an incremental factor k.iner, for example equal to 20%.

On the other hand, if temperature Tₛₑₜ has clearly been reached with excessive advance δt_{anticipo} compared to the end of the active night period PA₁, value δt₁ or δt₂ is decreased according to which one has been applied; the decrease may occur by multiplying by a decremental factor k.decr for example equal to 10%. The value of δt_{anticipo} which may be deemed excessive strongly depends on the water heater features; it is assigned experimentally and may be comprised between 30 and 60 minutes. The reduced heating length value δt₂ must be predetermined as well; for example, equal to 50% of δt₁ but the accurate predetermination of both δt₁ and δt₂ is not required according to the version that offers the additional possibility just described of correcting the values as the operating days pass.

In order to ignore abnormal and Occasional amounts of drawings that may not repeat, it is preferable to make the correction of values δt₁ or δt₂ of the incremental or decremental factors k.incr or k.decr only after that for a few consecutive days, for example two, the circumstance requiring such correction occurs.

According to a further additional possibility, the check of whether the days of the week are "with drawings" or "without drawings" continues during all the sequences of seven day cycles for monitoring any changes in the users' habits and if a charge is noted for two consecutive weeks, the schedule of the days of the week as days "with drawings" or "without drawings" is updated.

Going now to the particular case of said zones wherein there are multiple active periods; for example a night one PA₁ lasting 5 hours from 1.00 AM to 6.00 AM; one at lunchtime PA₂ lasting 2. hours from 12.00 PM to 2.00 PM; an afternoon one PA₃ lasting 1 hour from 5.00 PM to 6.00 PM, the method according to the invention always privileges, for heating, the active night period PA₁ and only if the length is not sufficient for containing the standard heating lengths δt₁ or even reduced δt₂, all or part of the active period of lunch PA₂ is also occupied and if this is not sufficient either, the active period in the afternoon PA₃ as well:

## Claims

1. Method for the management of a storage water heater which is used with modes that reiterate substantially identical for a cycle of days, in particular for a, weekly cycle,
wherein the water is heated within one or more active periods (PA₁, PA₂, PA_{3;} PAn), by a heating element piloted
- by a thermostat
- and by an electronic control having at least means suitable for
- measuring the time elapsed
- receiving or having pre-stored information on the duration of the one or more active periods (PA₁, PA₂, PA₃; PAₙ)
- receiving information on the water temperature inside the electrical water heater
- storing the preset and/or read data
- allowing the activation/deactivation of the electrical heating element based on the calculations processed and on the temperature of the water itself
said management method envisaging a function of reduction of energy consumption,
**characterised in that**
the electronic control performs a drawing learning step (Fb) for learning the days wherein there are or not hot water drawings from said storage water heater during which:
- at the beginning of each active period (PA₁, PA₂; PA_{3;} PAₙ), it reads the final temperature (T_{finale}) of the water in the water heater at the end of an operating day
- it records the day just ended or about to end as "day with drawings" if said temperature (T_{finale}) is lower than the reference temperature (T_{rif}), typical of the water heater, which is the minimum value that may be reached by the effect of cooling only, otherwise
- it records the day Just ended or about to end as "day without drawings" if said temperature (T_{finale}) is higher than or equal to said reference temperature (T_{rif}), typical of the water heater
during said drawing learning step (Fb) it being possible to have water drawings from the water heater according to the requirements.

2. Method for the management of a storage water heater according to the previous claim
**characterised in that**
said information on the duration of said one or more active periods (PA₁, PA₂, PA₃; PAn) is performed by said electronic control during an initial learning step (Fa) for recognising said one or more active periods (PA₁, PA_{2,} PA₃; PAn), which
- is before said drawing learning step (Fb)
- and provides for a first sub-step (Fa₁) during which said electronic control:
- disables the activation of said heating element
- records and stores the start and end times of said one or more active periods (PA₁, PA₂, PA₃; PAₙ),
- ends the same first sub-step (Fa₁) only after the reiteration of an active night period (PA₁) subsequent to the first one has been detected
and **in that**
during said drawing learning step (Fa), the user is prevented from drawing water from the water heater.

3. Method for the management of a storage water heater according to the previous
**characterised in that**
said initial learning step (Fa) provides for a second sub-step (Fa₂), subsequent to said first sub-step (Fa₁), during which said electronic control:
- allows the activation of said heating element at the beginning of the active night period (PA₁) immediately subsequent to the first one
- reads, at the beginning of said active night period subsequent to the first one (PA₁), the final temperature (T_{finale}) of the water in the water heater, said final temperature (T_{finale}) being assumed as equal to the cooling temperatures (T_{raffredd})at which the water heater drops without drawings
- calculates the reference temperature (T_{rif}) according to formula T_{rif}=T_{raffredd} - ΔT_{hysteresis}, the hysteresis (ΔT_{hysteresis}) being the difference of the starting and stopping temperature of a thermostat that activates and/or deactivates said heating element
- stores the reference temperature value (T_{rif}) calculated.

4. Method for the management of a storage water heater according to claim 1
**characterised in that**
the starting and ending times of said one or more active periods (PA₁, PA₂, PA₃; PAₙ) and the reference temperature (T_{rif} that is the minimum value that may be reached by the water in the water heater by the effect of the cooling only are entered and stored by the manufacturer or by the installer.

5. Method for the management of a storage water heater according to any previous claim
**characterised in that**
it provides for a subsequent heating step (Fc) of the water in the water heater, which:
- is only allowed if the day that is beginning is stored as "day with drawings"
- takes place during said active night period (PA₁)
- is aimed at bringing the average temperature (Tₘ) of the water in the water heater from the minimum final temperature (T_{finale.min}) to the calibration temperature (Tₛₑₜ), where
- (Tₘ) is the temperature resulting from the average between one or more temperatures detected at different heights in said water heater,
- T_{finale.min}) is the final temperature (T_{finale}) found when at the dome of said water heater the temperature is dropped just below the useful minimum temperature (Tᵤ) to use the hot water,
- (Tₛₑₜ) is the calibration temperature of said thermostat that activates and/or deactivates said heating element
- and starts at such a time as to end the moment said active night period (PA₁) ends.

6. Method for the management of a storage water heater according to claim 5 **characterised in that**
if the day before said day stored as "day with drawings" there have been drawings, said heating step (Fc) has a normal heating time (δt₁) equal to the time required for bringing said temperature Tₘ of the water from T_{finale.min} to Tₛₑₜ or a time equal to the active night period (PA₁) if the latter is shorter.

7. Method for the management of a storage water heater according to claim 5
**characterised in that**
said heating step (Fc) has a predetermined reduced time (δt₂) < (δt₁) if the day before said day stored as "day with drawings" them were no drawings.

8. Method for the management of a storage water heater according to claim 7
**characterised in that**
said predetermined reduced time (δt₂) is equal to 50% of the normal heating time (δt₁).

9. method for the management of a storage water heater according to at least claim 5,
**characterised in that**
the time (δt₁, δt₂) of said heating step (Fc) before each day stored as "day with drawings" is increased if at the end of said active night period (PA₁) before days stored as "day with drawings" said temperature (Tₘ) of the water in the water heater has a value < thanTₛₑₜ - ΔT_{hysteresis}.

10. Method for the management of a storage water heater according to the previous claim
**characterised in that**
the increase of said times (δt₁, δt₂) of said period of said heating step (Fc) consists in an incremental factor (k.incr) equal to 20%.

11. Method for the management of a storage water heater according to at least claim
**characterised in that**
the time (δt₁, δt₂) of said heating step (Fc) is reduced if said calibration temperature (Tₛₑₗ₎ has been reached with an advance (δt_{anticipo}) regarded as 5 excessive relative to the end of said active night period (PA₁).

12. Method for the management of a storage water heater according to the previous claim
**characterised in that**
the reduction of said times (δt, δt₂) of said heating step (Fc) consists in a decreasing factor (k.decr) equal to 10%.

13. Method for the management of a storage water heater according to claims 11 or 12
**characterised in that**
said advance (δt_{anticipo}) a value comprised between 30 and 60 minutes.

14. Method for the management of a storage water heater according to any previous claim from 9 on
**characterised in that**
the correction of the time (δt1, δt2) of said heating period (δt1, δt2) of said incremental factors (k.incr; k.decr) is only performed after that for a few consecutive days a circumstance that requires said correction occurs, said a few consecutive days being at least equal to two.

15. Method for the management of a storage water heater according to the previous claim
**characterised in that**
the recording of the "day with drawing" and of the "days without drawing" continues during all the sequences of said cycles of days for monitoring any user's usage changes, said recording of the days of the week as days "with drawing" or "without drawing" being updated if a thereof change occurs for two consecutive weeks.
